# EUROPÄISCHE PATENTSCHRIFT

(11) **EP 1 580 152 B1**
(45) Veröffentlichungstag und Bekanntmachung des Hinweises auf die Patenterteilung: **15.11.2006**
(21) Anmeldenummer: 05005772.8
(22) Anmeldetag: 16.03.2005
(51) Int. Cl.: B65G 53/46

(54) **Zellenradschleuse für den Eintrag und Austrag von Fördergut in oder aus einem Druckraum**
Rotary valve for the charging and discharging of solid materials in or out of a pressurized chamber
Vanne rotative de chargement et de déchargement de matières en vrac d'une chambre sous pression

(30) Priorität: 25.03.2004 DE 102004014736
(43) Veröffentlichungstag der Anmeldung: 28.09.2005
(73) Patentinhaber: Karl Hamacher GmbH, 44866 Bochum (DE)
(72) Erfinder:
(74) Vertreter: GROSSE BOCKHORNI SCHUMACHER

(56) Entgegenhaltungen:
- EP-A- 0 732 280
- DE-A1- 19 959 856

## Beschreibung

Die Erfindung betrifft eine Zellenradschleuse gemäß dem Oberbegriff des Anspruches 1.

Derartige Zellenradschleusen sind bekannt (vgl. EP 0 732 280 A1) und dienen zum Ein- und Austrag von Fördergut, insbesondere Feinstfördergut pulvriger, mehlartiger, fasriger und feinstschnitzelartiger Art in oder aus einem Druckraum einer Behandlungseinheit, etwa einen Trockner. Die Zellenradschleuse weist ein konisches Zellenrad auf, das in einem Gehäuse, welches an der Innenwand in einer Verschleißbuchse versehen ist, umläuft. Das Zellenrad weist mehrere Speichen und einen vordere und hintere Stirnwand auf, wobei die Speichen zusammen mit den Stirnwänden Zellen für den Transport des Förderguts bilden. Die Zellen laufen zur Aufnahme des Förderguts an der Eingabeöffnung vorbei, passieren dann beispielsweise eine Dampfeintragsöffnung bzw. eine Drucköffnung, sodass die Zelle unter Arbeitsdruck der Behandlungskammer gesetzt wird bzw. unter die Bedingungen, die in der Behandlungskammer herrschen, wonach dann mit weiterer Drehbewegung das Fördergut zur Ausgabeöffnung und von dort in die Behandlungskammer geführt wird. Mit der Weiterdrehung gelangt die Zelle dann an eine Entspannungsöffnung bzw. eine Ablassöffnung, über welche beispielsweise Dampf abgeführt wird. Mit weiterer Drehung passiert die Zelle dann wieder die Eingabeöffnung und wird erneut mit Fördergut gefüllt. Der gleiche Sachverhalt tritt auf, wenn die Zellenradschleuse als Ausgabeeinheit verwendet wird und dann eine entsprechende Behandlungskammer nachgeschaltet ist.

Das Zellenrad läuft mit den beiden Stirnwänden um die Verschleißbuchse, wobei zwischen äußerer Mantelfläche der Stirnwand und der Verschleißbuchse ein gering bemessener Lagerspalt bzw. Ringspalt verbleibt, der auch als Dichtspalt wirkt. Dieser Spalt ist unvermeidlich und birgt die Gefahr in sich, dass sich beim Transport von Feinstgut Teilchen im Ringspalt festsetzen, die dann anbacken und zu einer Behinderung bzw. Bremsen der rotatorischen Zellenradbewegung führen. Diese Anbackungen oder Beläge müssen dann aufwändig entfernt werden, was zu einer Unterbrechung des Betriebs der Zellenradschleuse führt.

Aufgabe der Erfindung ist es, eine Zellenradschleuse zu schaffen, mit der diese Nachteile beseitigt werden.

Diese Aufgabe wird erfindungsgemäß durch die im kennzeichnenden Teil des Anspruchs 1 enthaltenen Merkmale gelöst, wobei zweckmäßige Weiterbildungen durch die in den Unteransprüchen enthaltenen Merkmale gekennzeichnet sind.

Nach Maßgabe der Erfindung werden auf den äußeren Mantelflächen der Stirnflächen des Zellenrads Abkratznuten vorgesehen, sodass aufbauende Beläge abgekratzt bzw. großflächige Ablagerungen auf der Ringfläche des Zellenrades oder auf der Gegenfläche der Verschleißbuchse abgetragen werden können bzw. der Aufbau überhaupt verhindert wird.

Zweckmäßigerweise sind die Nuten schräg nach hinten entgegen der Drehrichtung angestellt, sodass abgekratztes bzw. aufgelöstes Fördergut aus dem Bereich zwischen Ringfläche der Stirnwände und der Verschleißbuchse wieder zurück in das Innere und in den Produktstrom geführt wird. Zweckmäßigerweise verjüngen sich die Nuten vom Zellenradinneren nach außen hin und zwar vorzugsweise konisch, was die Rückführung von abgekratzten bzw. entfernten Fördergut begünstigt.

In der Praxis hat es sich als sehr vorteilhaft herausgestellt, dass die Nut unter einem Winkel von 20° bis 45°, insbesondere 25 bis 35°, vorzugsweise 30° schräg gestellt ist. Dadurch gibt sich eine gute Rückführung und ein guter Kratzeffekt. Hierbei erstrecken sich die Nuten im Wesentlichen über die gesamte Mantelfläche (Längsrichtung), wobei jedoch die Enden der Nuten kurz vor der äußeren Stirnwand der beiden Stirnwände enden. Selbstverständlich sind die Nuten nach innen hin, also zum Inneren des Zellenrads oder zur Zelle hin offen, um das abgetragene Gut in das Zelleninnere rückzuführen.

In weiterer Ausbildung der Erfindung sind die seitlichen Nutwände leicht schräg gestellt, was den Messereingriffseffekt verstärkt. Hierbei eignen sich Schrägstellungen der seitlichen Nutwände unter einem Winkel von 5 bis 15°, insbesondere 10°.

In einer vorteilhaften Ausführungsform der Erfindung sind je Zelle an der vorderen Stirnwand drei und an der hinteren Stirnwand vier Nuten vorgesehen, bei insgesamt sechs Zellen achtzehn Nuten an der vorderen und vierundzwanzig Nuten an der hinteren Stirnwand.

Nachfolgend wird ein bevorzugtes Ausführungsbeispiel der Erfindung anhand der Zeichnung beschrieben. Dann zeigen
- Figur 1: eine Ansicht im Längsschnitt einer Zellenradschleuse für die Verwendung als Eingabeeinrichtung für einen Trockner,
- Figur 2: eine Draufsicht in einer schematischer Darstellung auf das Zellenrad,
- Figur 3: Schnittansichten längs der Linien A-A und B-B gemäß Figur 2,
- Figur 4: eine Detailansicht auf die Mantelfläche der hinteren Stirnwand des Zellenrads sowie
- Figur 5: eine Detailansicht der in die Mantelfläche eingebrachte Nut gemäß Figur 4.

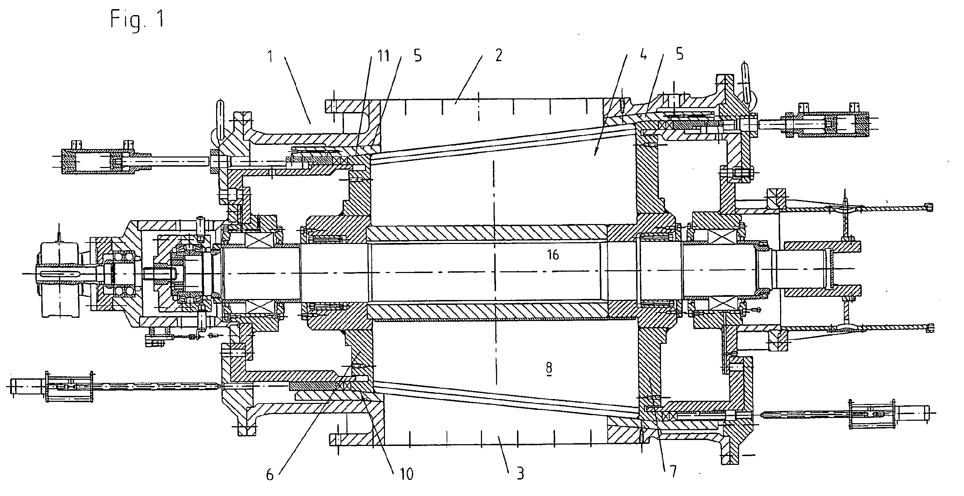

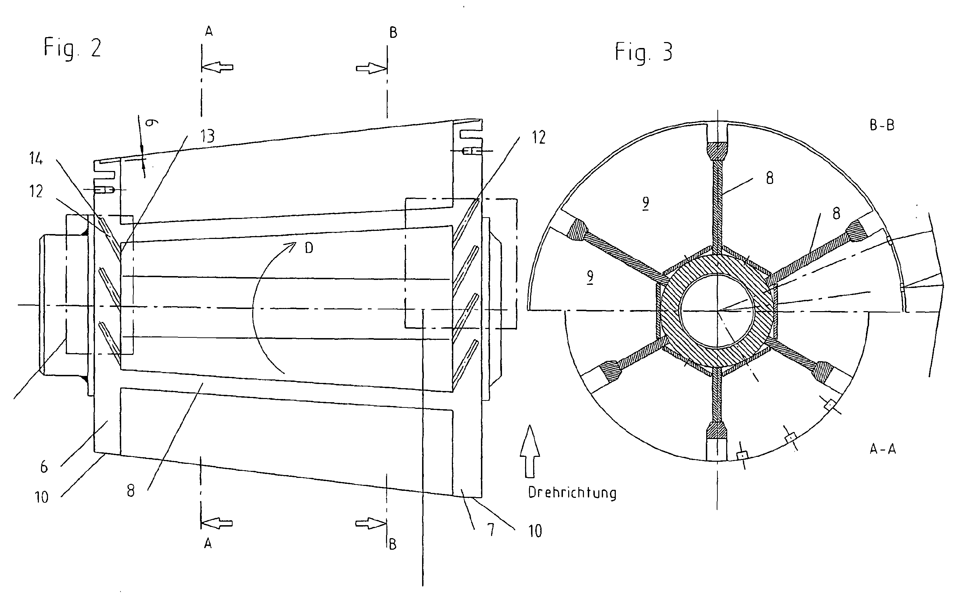

Figur 1 zeigt den Längsschnitt einer Zellenradschleuse, wie sie beispielsweise für den Eintrag von sägemehlartigen Holzteilchen, Holzfeinstschnitzel und dergleichen in eine unter Druck stehende Behandlungskammer, etwa einen Dampftrockner, geführt wird. Diese Zellenradschleuse kann aber auch als Ausgabeeinrichtung verwendet werden und wäre dann dem hier zeichnerisch nicht dargestellten Trockner nachgeschaltet. Das mit 1 bezeichnete Zellenradgehäuse weist eine mit 2 bezeichnete Eintragsöffnung und eine mit 3 bezeichnete Austragsöffnung auf. Innerhalb des Zellenradgehäuses 1 ist das Zellenrad 4 angeordnet, welches auf einer Achse 16 befestigt ist, die hier von links von einen nicht dargestellten Motor über ein Getriebe angetrieben wird. Da der allgemeine Aufbau der Zellenradschleuse bekannt ist (vgl. EP 0 732 280 A1), werden im Folgenden nur die wesentlichen Bauteile für das Verständnis der Erfindung beschrieben. Innerhalb des Gehäuses 1 ist für den Schutz des Gehäuses eine Verschleißbuchse 5 angeordnet, in welcher das Zellenrad läuft. Das Zellenrad 4 ist von rechts nach links konisch verjüngt ausgebildet und weist eine vordere ring-oder scheibenförmige Stirnwand 6 sowie eine hintere gleichfalls scheiben- oder ringförmige Stirnwand 7 auf. Die Stirnwand 7 hat größeren Außendurchmesser als die vordere Stirnwand 6 zur Bildung des Konus. Zwischen den beiden Stirnwänden 6 und 7 erstrecken sich wandartige Speichen 8, die im Detail beispielsweise aus Figur 3 ersichtlich sind. Die Speichen 8 bilden mit der vorderen und hinteren Stirnwand 6 und 7 mit 9 (Figur 3) bezeichnete Zellen für die Aufnahme und Transport des Förderguts. Das Fördergut wird über die Einfuhröffnung 2 in die rotatorisch vorbeilaufende Zelle getragen und durch die Zelle in Folge der Rotationsbewegung dann zu einer zeichnerisch nicht dargestellten Dampfzuführung und schließlich zur Austragsöffnung 3 in den Trockner geführt. Die dort geleerte Zelle 9 läuft dann in weiterer Drehrichtung an einer zeichnerisch wiederum nicht dargestellten Abdampföffnung vorbei, sodass die Zelle entspannt und schließlich wieder mit Fördergut beim Vorbeilaufen an der Eingabeöffnung 2 gefüllt wird.

Die ringförmigen Stirnwände 6 und 7 laufen mit ihren äußeren Mantelflächen 10 (Figur 2) in der Verschleißbuchse 5 und begrenzen mit der Innenwand der Verschleißbuchse 5 einen sehr schmalen ringförmigen Dichtspalt, der in Figur 1 mit 11 angedeutet ist. Während des Transports des Förderguts können die Feinstteilchen in den Dichtspalt bzw. infolge der rotatorischen Ablaufbewegung zwangsweise vorhandenen Spalt zwischen äußerer Mantelfläche 10 und der Innenwand der Verschleißbuchse 5 gelangen, bauen sich dort zu einem Belag auf, der verbackt und die Drehbewegung der Zellenradschleuse bremsen und behindern kann.

Zur Vermeidung der Anbackungen bzw. Beläge bzw. zum Auflösen solcher Beläge sind in der äußeren Mantelfläche der vorderen und der hinteren Stirnwand 6 und 7 Nuten 12 eingebracht, die schräg gestellt sind und deren Nutränder als Messerkanten wirken und das Auftreten von Belägen verhindern und etwaige Anbackungen beseitigen. Die Nuten 12 auf der äußeren Mantelfläche 10 der beiden Stirnwände 6 und 7 sind hierbei schräg gestellt und zwar zweckmäßigerweise schräg nach hinten entgegen der Drehrichtung, sodass das in das Zelleninnere einmündende Ende 13 einer Nut 12 gegenüber dem hinteren Ende 14 in Drehrichtung D hinten, d. h. nachlaufend angeordnet ist. Durch diese nach hinten entgegen der Drehrichtung gestellte Ausrichtung der Nuten 12 wird bewerkstelligt, dass sich durch die Nuten abgekratztes Gut längs der Nuten wieder in das Zelleninnere, also in das Zellenrad gefördert wird. Dieses Gut kann dann mit dem in der Zelle befindlichen Fördergut im Produktstrom weiter transportiert werden.

Im dargestellten Ausführungsbeispiel sind die Nuten 12 unter einem Winkel von 30° schräg gestellt.

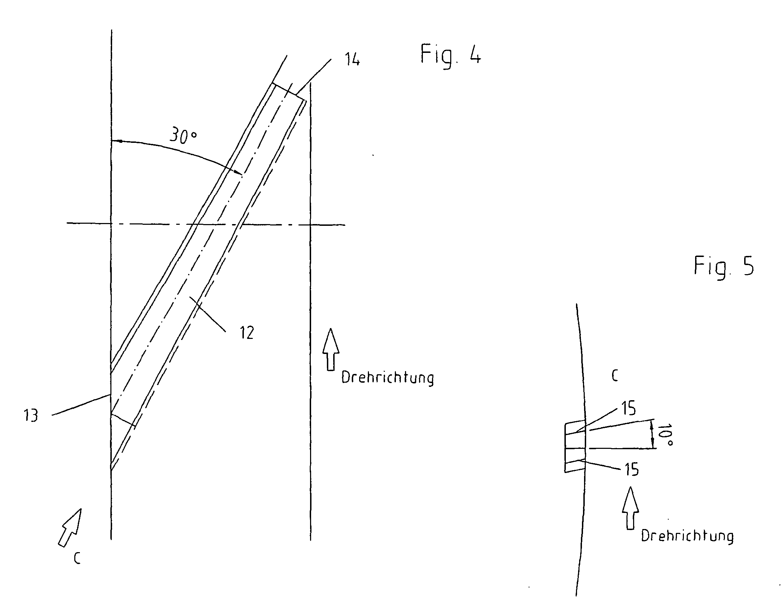

Figur 4 zeigt eine Nut 12 auf der äußeren Mantelfläche 10 der hinteren Stirnwand 7, wobei hier bei insgesamt bei sechs Zellen vierundzwanzig Nuten vorgesehen sind, wobei je vier Nuten einer Zelle 9 zugeordnet sind. Bei der vorderen Stirnwand sind drei Nuten je Zelle vorgesehen. Wie aus der Detaildarstellung aus der Figur 5 ersichtlich ist, sind die Nutwände 15 jeweils unter einem Winkel von 10° schräg gestellt, sodass sie als Messerkanten geeignet wirken. Wie am besten aus Figur 4 ersichtlich ist, sind die Nuten in Längsrichtung konisch ausgebildet, wobei sich die Nuten vom Inneren des Zellenrads nach außen hin, also von der Nutöffnung 13 zum Ende 14 der Nut hin, verjüngen, was die Rückführung des im Ringspalt angesammelten und abgekratzten Förderguts zur Zelle hin begünstigt.

## Patentansprüche

1. Zellenradschleuse für den Eintrag oder Austrag von Fördergut, insbesondere Feinstspäne, Sägemehl, sägemehlartige Teilchen und dergleichen, in oder aus einem Druckraum, insbesondere Trockner, mit einer drehfesten konischen und im Zellenradgehäuse (1) angeordneten Verschleißbuchse (5) und einem in dem Gehäuse (1) und in der Verschleißbuchse (5) umlaufenden konischen Zellenrad (4), das auf einer motorgetriebenen Achse (16) angeordnet ist, wobei das Zellenrad (4) eine vordere ringförmige Stirnwand (6) und eine hintere ringförmige Stirnwand (7) mit größerem Außendurchmesser aufweist und sich zwischen den beiden Stirnwänden (6, 7) sich radial bezüglich der Achse erstreckende Speichen (8) zur Bildung von Zellen (9) des Zellenrades (4) erstrecken und wobei die umlaufenden Stirnwände (6, 7) des Zellenrads (4) mit ihren äußeren Mantelflächen (10) jeweils einen ringförmigen Dichtspalt (11) mit der Verschleißbuchse (5) begrenzen, **dadurch gekennzeichnet, dass** auf den äußeren Mantelflächen (10) der Zellenradstirnwände (6, 7) Abkratznuten (12) eingearbeitet sind.

2. Zellenradschleuse nach Anspruch 1, **dadurch gekennzeichnet, dass** die Nuten (12) schräg nach hinten entgegen der Drehrichtung D angestellt sind.

3. Zellenradschleuse nach Anspruch 1 oder 2, **dadurch gekennzeichnet, dass** sich die Nuten (12) vom Zellenradinneren nach außen hin vorzugsweise konisch verjüngen.

4. Zellenradschleuse nach einem der vorhergehenden Ansprüche, **dadurch gekennzeichnet, dass** die Nut (12) unter einem Winkel von 20 bis 45°, insbesondere 25 bis 35°, vorzugsweise 30° schräg gestellt ist.

5. Zellenradschleuse nach einem der vorhergehenden Ansprüche, **dadurch gekennzeichnet, dass** die in die Zelle einmündende Nutenden (13) gegenüber den äußeren Nutenden (14) in Drehrichtung hinten bzw. nachlaufend angeordnet sind.

6. Zellenradschleuse nach einem der vorhergehenden Ansprüche, **dadurch gekennzeichnet, dass** die seitlichen Nutwände (15) leicht schräg gestellt sind.

7. Zellenradschleuse nach Anspruch 6, **dadurch gekennzeichnet, dass** die seitlichen Nutwände (15) unter einem Winkel von 5 bis 15°, insbesondere 10° schräg gestellt sind.

8. Zellenradschleuse nach einem der vorhergehenden Ansprüche, **dadurch gekennzeichnet, dass** je Zelle (9) an der vorderen Stirnwand (6) drei und an der hinteren Stirnwand (7) vier Nuten (12) vorgesehen sind.

9. Zellenradschleuse in einen der vorhergehenden Ansprüche, **dadurch gekennzeichnet, dass** das Zellenrad (4) sechs Zellen (9) aufweist.

## Claims

1. Rotary valve for the charging or discharging of conveyed material, in particular ultrafine chips, sawdust, sawdust-like particles and the like, in or out of a pressurised chamber, in particular a dryer, having a non-rotatable conical wearing bush (5) disposed in the star feeder housing (1) and having a conical star feeder (4) which rotates in the housing (1) and in the wearing bush (5), said star feeder being disposed on a motor-driven axle (16), the star feeder (4) having a front annular end-wall (6) and a rear annular end-wall (7) with a greater outer diameter and, between the two end-walls (6, 7), spokes (8) which extend radially relative to the axle extending in order to form cells (9) of the star feeder (4) and the rotating end-walls (6, 7) of the star feeder (4) delimiting, with their outer peripheral faces (10), respectively one annular sealing gap (11) with the wearing bush (5), **characterised in that** scrape-off grooves (12) are incorporated on the outer peripheral faces (10) of the star feeder end-walls (6, 7).

2. Rotary valve according to claim 1, **characterised in that** the grooves (12) are placed diagonally to the rear counter to the direction of rotation D.

3. Rotary valve according to claim 1 or 2, **characterised in that** the grooves (12) taper outwardly from the star feeder interior preferably conically.

4. Rotary valve according to one of the preceding claims, **characterised in that** the groove (12) is placed diagonally at an angle of 20 to 45°, in particular 25 to 35°, preferably 30°.

5. Rotary valve according to one of the preceding claims, **characterised in that** the groove ends (13) opening into the cell are disposed opposite the outer groove ends (14) at the rear in the direction of rotation or trailing.

6. Rotary valve according to one of the preceding claims, **characterised in that** the lateral groove walls (15) are placed slightly diagonally.

7. Rotary valve according to claim 6, **characterised in that** the lateral groove walls (15) are placed diagonally at an angle of 5 to 15°, in particular 10°.

8. Rotary valve according to one of the preceding claims, **characterised in that** three grooves (12) are provided per cell (9) on the front end-wall (6) and four grooves on the rear end-wall (7).

9. Rotary valve in one of the preceding claims, **characterised in that** the star feeder (4) has six cells (9).

## Revendications

1. Vanne à roue cellulaire pour le chargement ou le déchargement de matières en vrac, en particulier de particules très fines, de sciure, de particules analogues à de la sciure et analogues, dans une ou hors d'une chambre sous pression, en particulier un séchoir, comprenant une douille d'usure (5) conique solidaire en rotation et disposée dans le carter de roue cellulaire (1) et une roue cellulaire (4) conique tournant dans le carter (1) et la douille d'usure (5), qui est disposée sur un axe (16) entraîné par un moteur, dans laquelle la roue cellulaire (4) présente une face frontale annulaire avant (6) et une face frontale annulaire arrière (7) qui a un diamètre extérieur supérieur et dans laquelle s'étendent, entre les deux faces frontales (6, 7), des rayons (8) s'étendant radialement par rapport à l'axe pour former des cellules (9) de la roue cellulaire (4), et les faces frontales périphériques (6, 7) de la roue cellulaire (4), avec leurs surfaces d'enveloppe externe (10), délimitent un jeu d'étanchéité annulaire (11) avec la douille d'usure (5), **caractérisée en ce que** des rainures de raclage (12) sont formées sur les surfaces d'enveloppe externe (10) des faces frontales de roue cellulaire (6, 7).

2. Vanne à roue cellulaire selon la revendication 1, **caractérisée en ce que** les rainures (12) sont inclinées vers l'arrière contre le sens de rotation D.

3. Vanne à roue cellulaire selon la revendication 1 ou 2, **caractérisée en ce que** les rainures (12) se rétrécissent, de préférence de manière conique, depuis l'intérieur de la roue cellulaire vers l'extérieur.

4. Vanne à roue cellulaire selon l'une quelconque des revendications précédentes, **caractérisée en ce que** la rainure (12) est inclinée à un angle de 20° à 45°, en particulier de 25° à 35°, de préférence de 30°.

5. Vanne à roue cellulaire selon l'une quelconque des revendications précédentes, **caractérisée en ce que** les extrémités de rainures (13) débouchant dans la cellule sont disposées à l'arrière ou en décalage par rapport aux extrémités externes de rainures (14) dans le sens de rotation.

6. Vanne à roue cellulaire selon l'une quelconque des revendications précédentes, **caractérisée en ce que** les parois latérales de rainures (15) sont légèrement inclinées.

7. Vanne à roue cellulaire selon la revendication 6, **caractérisée en ce que** les parois latérales de rainures (15) sont inclinées à un angle de 5° à 15°, en particulier de 10°.

8. Vanne à roue cellulaire selon l'une quelconque des revendications précédentes, **caractérisée en ce que** chaque cellule (9) est pourvue de trois rainures (12) sur la face frontale avant (6) et de quatre sur la face frontale arrière (7).

9. Vanne à roue cellulaire selon l'une quelconque des revendications précédentes, **caractérisée en ce que** la roue cellulaire (4) présente six cellules (9).
